# EUROPEAN PATENT SPECIFICATION

(11) **EP 4 439 320 B1**
(45) Date of publication and mention of the grant of the patent: **28.01.2026**
(21) Application number: 23216243.8
(22) Date of filing: 13.12.2023
(51) Int. Cl.: G06F 13/40, G06F 13/42, H04L 43/0876, H04L 43/16, H04L 47/70, H04L 47/83, G06F 1/3234, H04L 43/0894

(54) **METHOD AND APPARATUS TO IMPROVE PERFORMANCE AND BATTERY LIFE FOR SYSTEMS WITH DISCRETE UNIVERSAL SERIAL BUS CONNECTOR**
VERFAHREN UND VORRICHTUNG ZUR VERBESSERUNG DER LEISTUNG UND BATTERIELEBENSDAUER FÜR SYSTEME MIT DISKRETEM UNIVERSELLEM SERIELLEM BUSVERBINDER
PROCÉDÉ ET APPAREIL POUR AMÉLIORER LA PERFORMANCE ET LA DURÉE DE VIE DE BATTERIE POUR SYSTÈMES AVEC CONNECTEUR DE BUS SÉRIE UNIVERSEL DISCRET

(30) Priority: 29.03.2023 US 202318192449
(43) Date of publication of application: 02.10.2024
(73) Proprietor: INTEL Corporation, Santa Clara, CA 95054 (US)
(72) Inventor: SUBRAMANIAN, Ravishankar, 560103 Bangalore (IN); GOPALAKRISHNAN, Venkataramani, Folsom, CA, 95630 (US); HAYAT, Yaniv, Herzliya (IL); ROZIC, Reuven, 30500 Binyamina (IL)
(74) Representative: Viering, Jentschura & Partner mbB Patent- und Rechtsanwälte

(56) References cited:
- WO-A1-2015/167490
- US-A1- 2019 121 417
- ROHILLA GEETANJALI ET AL: "Functional Verification of MAC-PHY Layer of PCI Express Gen5.0 with PIPE Interface using UVM", 2020 INTERNATIONAL CONFERENCE FOR EMERGING TECHNOLOGY (INCET), IEEE, 5 June 2020 (2020-06-05), pages 1 - 5, XP033805909, DOI: 10.1109/INCET49848.2020.9154176

## Description

### FIELD

The present application includes an apparatus and a non-transitory machine-readable storage as set out in the appended set of claims and generally relates to the field of computing devices and more particularly to reducing power consumption in a serial bus link.

### BACKGROUND

Peripheral connectors such as those which follow the Universal Serial Bus (USB) specifications have rapidly evolved and gained acceptance in the computing industry. These connectors allow a host computer to exchange data with a variety of peripheral devices such as a keyboard, mouse, video camera, printer, portable media player, display device, or external storage device. However, various challenges are presented in reducing the power consumption in the host computer when these connectors are used.
US 2019121417 A1 discloses that first data is transmitted from a modem of a device to a processor of the device over a point-to-point serial data link at a first one of a plurality of link speeds, where the first data is received at the device over a wireless network connection. The data link transitions to an inactive state following transmission of the first data. Second data is identified that has likewise been received over a wireless network connection, where at least a portion of the second data is received at the device while the data link is in the inactive state. A change from the first speed to a second one of the plurality of link speeds is determined based on historical parameters and predictive parameters. The data link is transitioned to an active state operational at the second link speed to transmit the second data to the processor over the data link.
WO 2015167490 A1 discloses techniques to determine an adjustment to front end bandwidth of a server based on backend bandwidth and to adjust power consumption of an input/output (I/O) device.
Rohilla Geetanjali et. al. "Functional Verification of MAC-PHY Layer of PCI Express Gen5.0 with PIPE Interface using UVM"; 2020 International Conference for Emerging Technology (INCET), 20200605 - 20200607, Belgaum, India, 2020-06-05, IEEE discloses verification of PCIe Gen5.0 transactions between MAC and PHY layers.

### SUMMARY

The invention pursed in the present application is set out in the appended set of claims.

### BRIEF DESCRIPTION OF THE DRAWINGS

The embodiments of the disclosure will be understood more fully from the detailed description given below and from the accompanying drawings of various embodiments of the disclosure, which, however, should not be taken to limit the disclosure to the specific embodiments, but are for explanation and understanding only.
FIG. 1 depicts a computing system 100 in which a system-on-a-chip (SoC) 101 communicates with a USB4 discrete host 102 via a link 103 such as a Peripheral Component Interconnect Express (PCIe) link, according to various embodiments.
FIG. 2A depicts an example implementation of the link 103 and the PCIe PHY I/Fs 130 and 140, according to various embodiments.
FIG. 2B depicts example evaluation cycles consistent with FIG. 2A and 3, according to various embodiments.
FIG. 2C depicts a table of unidirectional bandwidth values for different versions of PCIe, according to various embodiments.
FIG. 3 depicts a flowchart of an example process for adjusting a bandwidth of the link 103 of FIG. 1, according to various embodiments.
FIG. 4 depicts a flowchart of an example process for adjusting a bandwidth of the link 103 of FIG. 1 in a scenario where the display device 182 is connected, according to various embodiments.
FIG. 5 depicts a flowchart of an example process for adjusting a bandwidth of the link 103 of FIG. 1 in a scenario where the keyboard 183 and/or mouse 184 are connected, according to various embodiments.
FIG. 6 illustrates an example of components that may be present in a computing system 650 for implementing the techniques (e.g., operations, processes, methods, and methodologies) described herein, according to various embodiments.

### DETAILED DESCRIPTION

As mentioned at the outset, various challenges are presented reducing power consumption in a host computer which is connected to peripheral devices via USB and other connector standards.

USB and related technologies such as Intel^{®} Thunderbolt^{™} have rapidly evolved and been adapted by the industry in the past few years. These technologies provide high-speed data transfer as well as charging of the host computer or peripheral. Thunderbolt^{™} technology is a universal cable connectivity solution which uses the same Type-C connector as other USB Type-C (USB-C) ports.

The latest USB standard, USB4, uses the same cable and connector technology for data exchange between a host computer and a wide range of simultaneously accessible peripherals. USB4 v2 is the next generation USB4 technology that increases the USB4 bandwidth from 40 Gbps to 80 or 120 Gbps. USB4 v2 controllers provide the best-in-class display throughput (e.g., using DisplayPort 2.1) over Type C connectors by increasing the bandwidth to 3X over USB4 v1 and 1.5X over traditional native display ports. DisplayPort (DP) is a digital display interface developed by a consortium of personal computer (PC) and chip manufacturers and standardized by the Video Electronics Standards Association. It is primarily used to connect a video source to a display device such as a computer monitor. It can also carry audio, USB, and other forms of data.

The existing bandwidth allocation mechanism for USB4 prioritizes Display and Isochronous traffic over Peripheral Component Interconnect Express (PCIe) and USB bulk traffic. The PCIe standard defines four link power state levels that are software controlled. These power states are, from highest to lowest power state: fully active state (L0), electrical idle or standby state (L0s), L1 (lower power standby/slumber state), L2 (low power sleep state), and L3 (off state). Furthermore, L1 sub-states L1.1 and L1.2 can be used to turn off additional analog circuits in the PHY. In particular, L1.1 allows the common-mode voltage to be maintained, while L1.2 allows all high-speed circuits to be turned off.

However, with the increase in bandwidth, there is also an increase in power consumption for similar workloads/use cases due to an increase in power consumption by the physical layer (PHY) and controller. A PHY is an electronic circuit, e.g., integrated circuit, used to implement physical layer functions of the Open Systems Interconnection (OSI) model in a network interface controller.

One possible solution is to statically configure the PCIe host controller of a discrete USB or Thunderbolt^{™} controller to PCIe Gen 4x4 (generation 4 using 4 lanes) or PCIe Gen3x4 (generation 3 using 4 lanes) for USB4 v2 and USB4 v1 implementations, respectively. However, display data is sent over a Type C connector either as tunneled traffic or native traffic which is separate from the PCIe link and doesn't required PCIe bandwidth. There are other prominent use cases like USB camera that would be prioritized over PCIe or USB bulk traffic. In these cases, power consumption is not optimized because existing solutions do not change the PCIe host controller bandwidth or link speed. Instead, the existing power management policies of discrete host controllers are limited to downstream link power management (up-to the L1.sub-state) which is dependent on sink device latencies. Moreover, there are commercial devices available in the market that do not adhere to specifications or lower latencies, thereby penalizing the host from entering any lower link states. This negatively impacts battery life and thermal performance. With these solutions, there is no concept of upstream link power management to save power depending on bandwidth requirement.

There is no dynamic speed change of the upstream link with PCIe PHY supporting only up to the L1.sub-state.

For discrete host configurations, USB2 is routed from SoC South or the Platform Controller Hub (PCH) eXtensible Host Controller Interface (xHCI) controller. This is done because Human Interfaces Devices (HID) devices, e.g., keyboards, mice and game controllers, consume significant power from the PCIe interface if USB2 is routed from the discrete controller.

To address the above and other issues, the power consumption of a PCIe link can be optimized for different workloads depending on the bandwidth consumption (data rate) and use cases. For both mobile and desktop systems with discrete USB, Thunderbolt^{™} or other configurations, beyond the link power management policies which exists today, the underlying software framework can be used to improve core and graphics performance and to preserve the battery by reducing the host controller link speed or turning off the host controller PCIe interface to reduce power consumption. This will maximize SoC performance and prevent over-stressing of the power delivery solution of the platform.

This approach can improve platform performance and battery life for discrete USB4 connector configurations on mobile and desktop platforms including USB4 v1 and v2 and Thunderbolt^{™},

For desktop and mobile systems that have a discrete configuration, e.g., where the SoC is separate from a discrete host controller, a mechanism is provided between the discrete (e.g., USB4 or Thunderbolt^{™}) host router, a software connection manager, and a native PCIe driver to allow the host controller link speed to be scaled down or up based on system level policies and application needs.

The solution provides a number of advantages. First, power consumption of the SoC is reduced during active use cases including Type C use cases. This power savings can be used to improve core/graphics processor performance and/or extend battery life, for example. The maximum power savings can be, e.g., in the range of hundreds of milliwatts per discrete host controller. Second, customer's systems can route earlier versions of USB such as USB2 from the discrete controller directly, thereby simplifying platform routing and reducing costs for add-in card (AIC) implementations.

The above and other advantages will be further apparent in view of the following discussion.

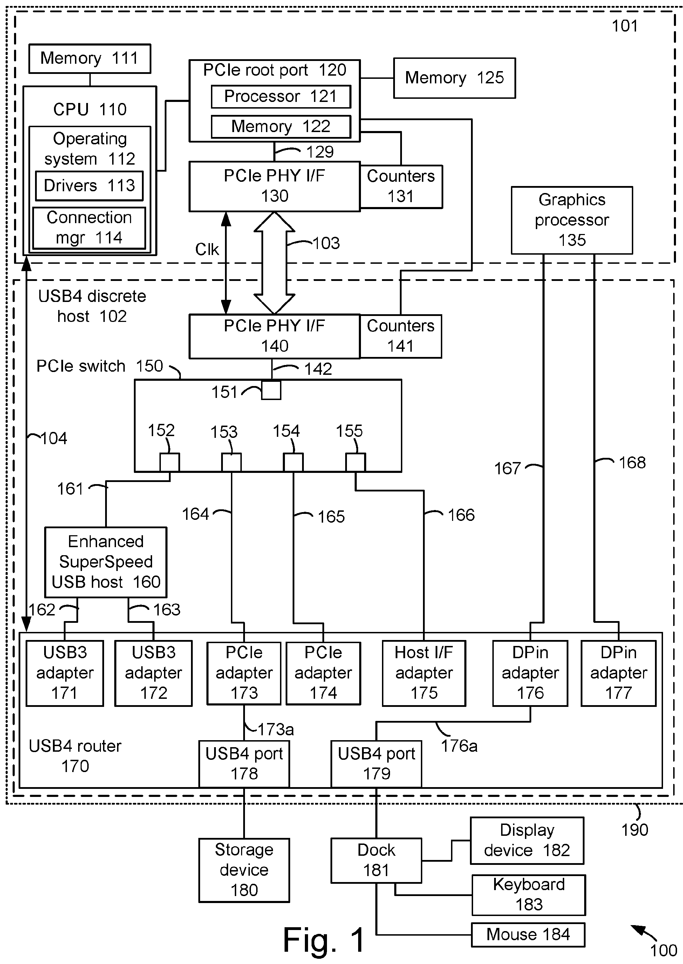

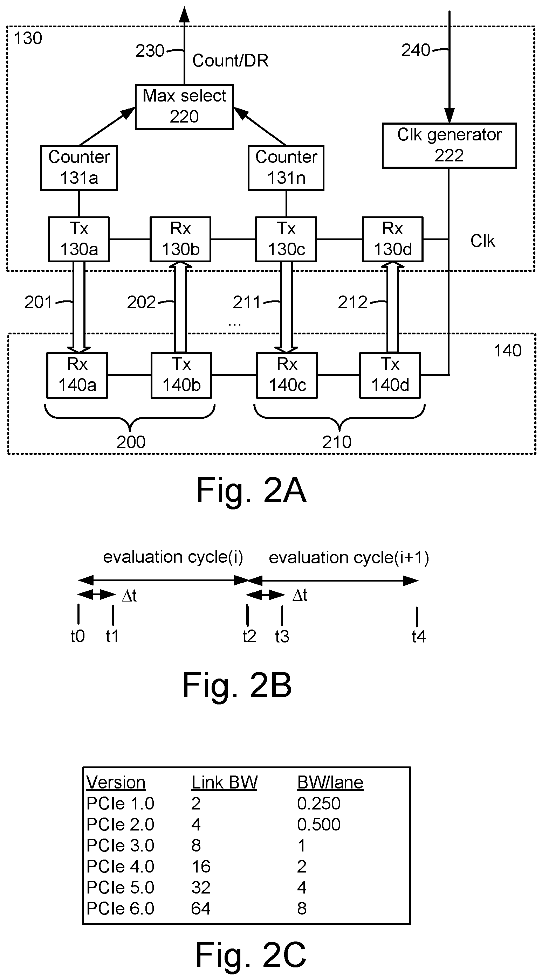

FIG. 1 depicts a computing system 100 in which a system-on-a-chip (SoC) 101 communicates with a USB4 discrete host 102 via a bidirectional link 103 such as a Peripheral Component Interconnect Express (PCIe) link, according to various embodiments. A PCIe link is a serial bus which transmits data serially in one or more lanes, where each lane is bidirectional. The SoC and USB4 discrete host may be separate circuits on a common printed circuit board 190, for example. The USB4 discrete host is discrete because it is separate from the SoC and uses the link 103 to communicate with the SoC. The SoC includes a PCIe root port 120, which is a circuit including a processor 121 to execute instructions stored in a memory 122. The PCIe root port 120 communicates via a path 129 to a PCIe PHY interface (I/F). As mentioned, the PHY is a circuit used to implement physical layer functions of the OSI model in a network interface controller. The PCIe PHY I/F 130 on the SoC communicates with a counterpart PCIe PHY I/F 140 on the USB4 discrete host via a PCIe link 103. This link can include one or more lanes in which data is exchanged between the two PCIe PHY I/F circuits 130 and 140. The PHY I/F 130 operates according to a clock signal, Clk, which can be adjusted to adjust the data rate on the link 103. See the example clock generator 222 in FIG. 2A. The PCIe PHY I/F circuits 130 and 140 are first/upstream and second/downstream PHY I/F circuits, respectively.

The number of lanes in the link is indicated by the PCIe configuration, e.g., x1, x4, x8, x16, x32. The number after the x indicates the number of lanes. Each lane can move data at one bit per cycle. A lane typically include four wires, two for downstream communications, from the PCIe PHY I/F 130 to the PCIe PHY I/F 140, and two for upstream communications, from the PCIe PHY I/F 140 to the PCIe PHY I/F 130.

The PCIe root port 120 may be responsive to instructions from the CPU 110 to transmit data in the memory 125 downstream on the link. The PCIe root may also store data which is received on the link in the memory 125 and notify the CPU. The CPU 110 is a processor which is to execute instructions stored in an associated memory 111. The CPU may implement an operating system 112 which includes drivers 113 and a software connection manager (mgr) 114, discussed further below.

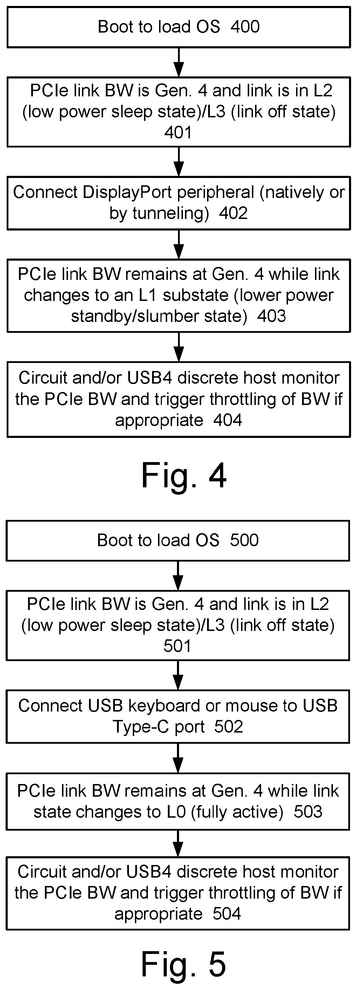

Counters 131 may be associated with the PCIe PHY I/F 130 to count a bit rate (data rate) of downstream communications over the link, in one possible approach. See also FIG. 2A. The counters 131 can report the bit rate, e.g., as a form of telemetry. Moreover, as described below in connection with FIG. 4 and 5, the PCIe PHY I/F 130 and 140 can be set in a reduced data rate/power consumption state if appropriate based on the bit rate.

The SoC may further includes a graphics processor 135 to transmit video/graphics data according to the DisplayPort standard, for example, to DPin adapters 176 and 177 via paths 167 and 168, respectively. This data is communicated separately from the PCIe link 103. An example routing path 176a in the USB4 router 170 allows the DPin adapter 176 to communicate with the USB4 port 179 which, in turn, is coupled to a display device 182 via a dock 181.

In the discrete host 102, the PCIe PHY I/F 140 may include or communicate with counters 141 to determine a bit rate (data rate) of the link 103 and to adjust a bandwidth of the link in response. See also FIG. 2A. The PCIe PHY I/F 140 also communicates with a port 151 PCIe switch 150 via a path 142. The port 151 is an upstream port because it points in the direction of the PCIe root port. The PCIe switch also includes downstream ports 152-155 which point away from the root port. The PCIe switch 150 includes switching logic which routes data packets between the port 151 and the ports 152-155. In this example, the port 152 is coupled via a path 161 to an Enhanced SuperSpeed USB host 160 which, in turn, is coupled to USB3 adapters 171 and 172 via paths 162 and 163, respectively. Enhanced SuperSpeed USB refers to a high-speed version of USB3. The USB3 adapters can be coupled, via the USB4 ports 178 and 179, to peripherals which use the USB3 standard. The adapters 171 and 172 provide tunneling of USB3 packets over the USB4 format.

The ports 153 and 154 are coupled to PCIe adapters 173 and 174, respectively, via paths 164 and 165, respectively. These adapters provide tunneling of load/store (PCIe) information over the USB4 format. For example, the storage device 180 could be coupled to the adapter 173 via a routing path 173a in the USB4 router 170.

The port 155 is coupled to a host I/F adapter 175 via a path 166. This adapter can be coupled to a peripheral which provides data which is already in the USB4 format, for example, and therefore does not require tunneling4.

The adapters depicted are an example only, as other types and combinations of types of adapters can be used. The adapters can be coupled to the USB4 ports 178 and 179 by a switching fabric of the USB4 router 170.

The PCIe switch 150 is in a four lane or x4 configuration, in this example. Accordingly, each lane of the link is used by a corresponding one of the downstream ports 152-155. The bandwidth of the link 103 is divided into four separate portions to carry four bits in total per cycle. The bandwidth represents a maximum available data rate of the link.

The USB4 router 170 includes switching logic which routes data packets between the adapters 171-177 and the USB4 ports 178 and 179, which are externally accessible, typically at the side or back of the computing device. A peripheral device can be coupled to the computing device by plugging a cable into one of the USB4 ports 178 and 179. In practice, the port 178 can be coupled to one of the adapters 171-177 and the port 179 can be coupled to another of the adapters 171-177 at a given time. In this example, the USB4 port 178 is coupled to an external storage device 180 such as a hard drive or solid-state drive (SSD). The storage device can be used to transfer data such as files to the SoC, or to receive and store data from the SoC. The USB4 port is coupled to a dock 181, also referred to as a docking station. This can be a USB4 compatible docking station in one possible approach. The dock, in turn, is coupled to a display device 182, e.g., a monitor, a keyboard 183 and a mouse 184. A docking station expands the number of ports which are available to plug in peripheral devices.

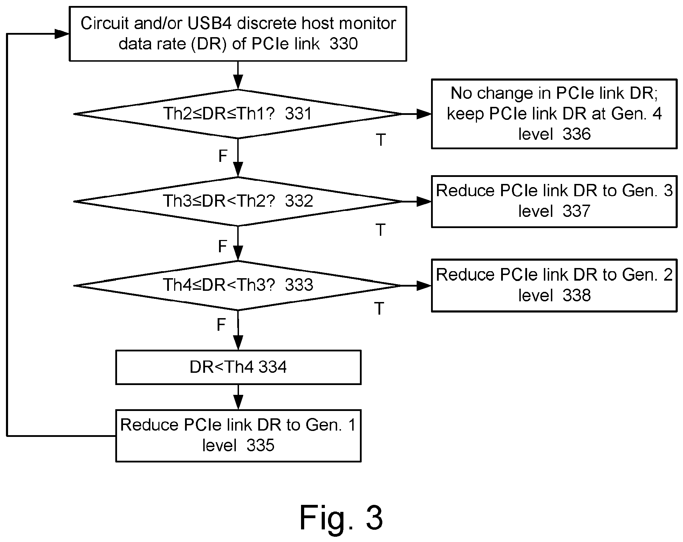

USB4 supports PCIe, DP and USB tunneling protocols. Tunneling allows multiple protocols to be combined over a single interface to increase flexibility. In one approach, the SoC 101 can monitor/measure the actual PCIe bandwidth consumed by the downstream devices through the PCIe upstream port 151. It can use the software connection manager 114 to notify a native PCIe bus driver (among the drivers 113) of the monitored bandwidth. A mechanism in the native PCIe bus driver can expose the interfaces to throttle the PCIe link 103 at the PCIe root port. The CPU 110 thus instructs the PCIe root port to throttle the PCIe link 103 based on the magnitude of the consumed bandwidth/data rate relative to various bandwidth thresholds, such as described in the flowcharts of FIG. 3-5.

An additional communication path 104 can also be provided which allows the CPU 110 to communicate with the USB4 router 170 such as to receive a notification of when a peripheral device is connected to one of the USB4 ports 178 and 179, e.g., directly or via the dock 181, and the type of the device. The connecting of the peripheral triggers an evaluation of a data rate on the link 103 such as discussed below in connection with FIG. 3.

FIG. 2A depicts an example implementation of the link 103 and the PCIe PHY I/Fs 130 and 140, according to various embodiments. The link 103 can include one or more lanes where each lane provides full duplex bidirectional communication. As mentioned, the number of lanes can be 1, 4, 8, 16 or 32, for example. Two example lanes are depicted in the case of 4, 8, 16 or 32 lanes in total.

The link 103 includes example bidirectional lanes 200, ..., 210, where each lane includes downstream and upstream paths. For example, the lane 200 includes a downstream path 201 and an upstream path 202, and the lane 210 includes a downstream path 211 and an upstream path 212. Additionally, at one end of the link, the PCIe PHY I/F 130 includes transmitters (Tx) 130a, ..., 130c coupled to the paths 201, ..., 211, respectively, and receivers (Rx) 130b, ..., 130d coupled to the paths 202, ..., 212, respectively. At the other end of the link, the PCIe PHY I/F 140 includes transmitters 140b, ..., 140d coupled to the paths 202, ..., 212, respectively, and receivers 140a, ..., 140c coupled to the paths 201, ..., 211, respectively. The transmitters and receivers each receive the common clock signal Clk to transmit or receive data at the corresponding clock rate.

This example further depicts individual counters 131a, ..., 131n associated with each transmitter 130a, ..., 130c of the PCIe PHY I/F 130. These counters are part of the counters 131 of FIG. 1 in this example. Each counter can count a data rate of the data transmitted on the respective path. This can be, e.g., a bit rate or data packet rate, over a specified time interval Δt or evaluation cycle. The counters 131a, .., 131n report a count to a max select circuit 220, which in turn passes the maximum count value as an output count or data rate (DR) to be used in the process of FIG. 3, for example. For example, DR(i)=max count(i)/Δt for an ith time interval. In this approach, the DR represents a maximum DR of the lanes. In another option, the max select circuit is replaced by a summation circuit to provide a count which represents the sum of the counts across the lanes, in the downstream direction.

In one approach, DR is passed on a path 230 to the CPU via the PCIe root port to follow the process of FIG. 3 to adjust the clock rate. A corresponding instruction to adjust the clock rate can be received on a path 240 at a clock generator 222, where the clock rate defines the bandwidth. This is a maximum available bandwidth/data rate. Optionally, the adjustment of the clock rate can be performed at the PHY I/F 130 or other circuit.

In a further option, counters in the PCIe PHY I/F 130 could be associated with the receivers 130b, ..., 130d to determine a data rate. In another option, as part of the counters 141 of FIG. 1, individual counters could be associated with the transmitters 140b and 140d or the receivers 140a and 140c to determine a data rate.

FIG. 2B depicts example evaluation cycles consistent with FIG. 2A and 3, according to various embodiments. Each evaluation cycle includes an initial period of duration Δt in which a data rate is determined. This is a data rate calculation period. In a remainder of the evaluation cycle, the bandwidth is set based on the data rate determined in the data rate calculation period. For example, an ith evaluation cycle extends from t0 to t2, where the data rate calculation period extends from t0 to t1 and the remainder extends from t1 to t2. An i+1th evaluation cycle then extends from t2 to t4, where the data rate calculation period extends from t2 to t3 and the remainder extends from t3 to t4. It is possible to have a continuous series of consecutive evaluation cycles. It is also possible to trigger one or more evaluation cycles when a specified event occurs such as plugging in a peripheral to one of the USB ports.

FIG. 2C depicts a table of unidirectional bandwidth values for different versions of PCIe, according to various embodiments. Unidirectional refers to one direction along the link such as the downstream direction, from the PCIe PHY I/F 130 to the PCIe PHY I/F 140. The first column of the table indicates the PCIe version or generation. The second column indicates the link BW in Gbps (gigabits per second). The third column indicates the BW per lane (or per downstream path) in Gbps. The bidirectional or full duplex bandwidth values are twice the listed values. The bandwidth values could alternatively be expressed in terms of packets per second.

The counts determined for each lane in FIG. 2A can be converted to a data rate (DR) such as in bits per second (bps) and this data rate can be compared to thresholds corresponding to the unidirectional BW/lane of the different PCIe generations, in one approach. The BW/lane for PCIe versions/generations 1-6 is 250 Mbps, 500 Mbs, 1 Gbps, 2 Gbps, 4 Gbps and 8 Gbps, respectively.

FIG. 3 depicts a flowchart of an example process for adjusting a bandwidth of the link 103 of FIG. 1, according to various embodiments. At operation 330, the SoC 101 and/or USB4 discrete host 102 monitor the data rate of the PCIe link. This operation can occur in the data rate calculation period, at the start of an evaluation cycle, as discussed. The link may have a default or initial BW at the start of the evaluation cycle, such as the gen. 4 BW. The data rate can be the downstream data rate which corresponds to the amount of data used by the peripherals connected to the PCIe switch 150 via the adapters 171-175. The data rate can be monitored using the counters 131 and/or 141, in one approach. As mentioned in connection with FIG. 2A, in one possible approach, the counters can count the number of bits or data packets which are transmitted downstream in each lane over a specified time period and convert this number to a data rate. Bandwidth is, e.g., a measure of the transmission capacity of a network over a specific period of time. It is the rate at which a link may send or receive bits. The data rate or speed refers to the actual amount of data transferred. The bandwidth can be considered to be a maximum allowable data rate.

The process can be repeated periodically in consecutive evaluation cycles to determine in each cycle whether the bandwidth can be reduced. Once the bandwidth is reduced in a cycle, it may remain at the reduced level until the next cycle, in one approach. In one approach, a determination is made as to whether the bandwidth should be adjusted in each evaluation cycle of a plurality of consecutive evaluation cycles.

In one approach, an evaluation cycle is triggered by connection of a display peripheral to the discrete USB host.

In one approach, an evaluation cycle is triggered by connection of a keyboard or mouse/pointing device peripheral to the discrete USB host.

An evaluation cycle is triggered by connection of any peripheral to the discrete USB host.

Different bandwidths are associated with different configurations of the PCIe link, as discussed in connection with FIG. 2C. These are unidirectional bandwidths per lane which are used as thresholds to compare to the measured data rate (DR), to determine whether to adjust the link bandwidth, in one possible approach. For example, a decision operation 331 determines whether Th2≤DR≤Th1, where Th1 is the unidirectional per lane bandwidth of Gen. 4, for example (2 Gbps) and Th2 is the unidirectional per lane bandwidth of the next lowest generation, e.g., Gen. 3 at 1 Gbps. If the decision operation 331 is true (T), operation 336 indicates there is no change in the link BW. In this case, the maximum DR of a lane is between 1 and 2 Gbps, so the BW of 2 Gbps is optimal, e.g., sufficient but not excessive.

If the decision operation 331 is false (F), a decision operation 332 determines whether Th3 ≤DR<Th2, where Th3 is the bandwidth of Gen. 2, for example (500 Mbps). If the decision operation 332 is true (T), operation 337 includes reducing the PCIe link BW to the Gen. 3 level (1 Gbps). In this case, the maximum DR of a lane is between 500 Mbps and 1 Gbps, so the BW of 1 Gbps is optimal.

If the decision operation 332 is false (F), a decision operation 333 determines whether Th4≤DR<Th3, where Th4 is the bandwidth of Gen. 1, for example (250 Mbps). If the decision operation 333 is true (T), operation 338 includes reducing the PCIe link BW to the Gen. 2 level (500 Mbps). In this case, the maximum DR of a lane is between 250 Mbps and 500 Mbps, so the BW of 500 Mbps is optimal.

If the decision operation 333 is false, operation 334 indicates DR<Th4. In this case, operation 335 includes reducing the PCIe link BW to the Gen. 1 level (250 Mbps). In this case, the maximum DR of a lane is between 0 and 250 Mbps, so the BW of 250 Mbps is optimal. The process then continues at operation 330. The determination of whether to adjust the BW can be made periodically at specified intervals, e.g., multiple times per second or less frequently.

The reducing of the BW can be carried out by reducing a clock rate (see the clock signal Clk in FIG. 1 and 2A) at which the PCIe PHY I/F 130 transmit data downstream on the lanes of the link, in one approach. Reducing the clock rate reduces power consumption.

In one option, instead of the DR representing the maximum count of the lanes of the link, it can represent the sum of the counts across the lanes, as mentioned. In this case, the thresholds used in FIG. 3 can be based on the total unidirectional bandwidth across all lanes. A further option is to consider the bidirectional BW, e.g., the sum of the downstream and upstream bandwidths. This can be done on a per lane basis or across all lanes.

Additionally, a hysteresis can be implemented to prevent the BW from changing too frequently. For example, a rule may be imposed that the BW cannot change until after a number N1>1 of consecutive data rate readings have been obtained. Another rule may be imposed that a change in bandwidth must be warranted by N2>1 consecutive data rate readings. Another rule may be imposed that a change in bandwidth must be warranted by at least N3>1 out of N4>1 consecutive data rate readings (e.g., 4 out of 5). Additionally, a rule may be imposed regarding the degree to which the BW is changed in a single step. For example, a rule may be imposed that the BW may change by only X≥1 levels (generations) in an evaluation cycle when a change is indicated by one or more consecutive data readings. Other variations are possible as well.

Note that if there is a need to increase the BW from a reduced level, this can be determined in the next evaluation cycle. Any data packets which are waiting to be transmitted downstream can be buffered in the memory 125, for example, until the next interval when the clock rate/bandwidth can be increased.

In one approach, a circuit (e.g., PCIe PHY I/F 130) is to adjust the bandwidth in each evaluation cycle of a plurality of consecutive evaluation cycles.

In one approach, the circuit is to adjust the bandwidth based on a comparison of a maximum data rate of the respective data rates to one or more thresholds.

In one approach, the circuit is to reduce the bandwidth when the maximum data rate is below the one or more thresholds.

The one or more thresholds correspond to unidirectional per lane bandwidths of different generations of the PCIe standard.

In one approach, the one or more thresholds correspond to different consecutive ranges of data rates, e.g., Th2 to Th1, Th3 to Th2, and Th4 to Th3.

FIG. 4 depicts a flowchart of an example process for adjusting a bandwidth of the link 103 of FIG. 1 in a scenario where the display device 182 is connected, according to various embodiments. Different display modes supported in USB4 include DP Tunnel Mode (DisplayPort Tunneling) and Display Alt mode (DisplayPort Alt Mode 2.0).

With DP tunneling over USB4, the DP protocol packets are sent from the graphics processor to the DP IN adapter in the USB4 Host Router. Before the USB4 router sends the packets to the destination display peripheral, the DPin adapter converts the packets to USB4 packets. DP tunneling uses a side channel (e.g., path 167 or 168 in FIG. 1) to establish a connection between the graphics processor (a source of the display data) and the display device 182 (a sink of the display data).

DP Alt Mode allows a USB-C equipped computer to connect directly (natively) to a display or monitor which has a USB-C port. This mode uses the same side channel discussed above to establish a connection between the display source and the display sink device. The display data path bandwidth for the DP tunneling and DP Alt modes depends on the capability of the graphics processor 135 or other display source but not on the bandwidth of the link 103, since a side channel is used. In some implementations, the PCIe link cannot reach the L2/L3 Ready state due to low bandwidth activity and is not fully power gated. Hence, there is opportunity to downscale the link speed to lower the bandwidth to save power. The power savings from the PHY circuits alone when downscaling from Gen. 4 to Gen. 1 is expected to be around about 250 mW.

With the above in mind, the process of the flowchart proceeds as follows. At operation 400, the computing device is booted to load the operating system (OS). The OS can be loaded into the computer's main memory or RAM. The operating system 112 can include drivers 113 and a connection manager 114 such as depicted in FIG. 1. Initially after boot up, operation 401 indicates the PCIe link BW is at the Gen. 4 level (e.g., the highest available level) and the link is in the L2 state (lower power sleep state) or L3 state (off state). Operation 402 includes connecting a DisplayPort peripheral (e.g., version 1.4 or 2.1) natively or by tunneling. Operation 403 indicates that the PCIe link BW remains at the Gen. 4 level while the link state changes to an L1 sub state (e.g., lower power standby/slumber state). Display data is sent over the Type C connector either as tunneled traffic or native traffic which is separate from the PCIe link and doesn't required PCIe bandwidth. At operation 404, the SoC and/or USB4 discrete host monitor trigger throttling of the link BW if appropriate, such as based on the process of FIG. 3.

In one approach, a first physical interface circuit (e.g., PCIe PHY I/F 130) increases a power state of the serial bus link, e.g., from an L2/L3 state to an L1 sub state, in response to the connection of a DisplayPort peripheral to the one or more USB ports.

FIG. 5 depicts a flowchart of an example process for adjusting a bandwidth of the link 103 of FIG. 1 in a scenario where the keyboard 183 and/or mouse 184 are connected, according to various embodiments. The computing device of FIG. 1 can provide USB2 native support. For example, a common use case of the USB4 discrete host is to connect a keyboard/mouse with a USB Type C cable. These are legacy USB (e.g., USB2) full speed/low speed devices that consume no more than 12 Mbps of BW (USB 1.1). However, if a USB2 peripheral is routed to the USB4/Thunderbolt^{™} discrete host xHCI controller, the PCIe switch is turned on since the xHCI controller is one of the downstream devices for the PCIe switch. As a result, the PCIe PHY I/Fs are powered on, burning additional power, up to about 300mW.

The USB standard defines four link power states: U0 (active), U1 (standby with fast exit), U2 (standby with slower exit), and U3 (suspended). Since legacy USB devices do not support lower U1/U2 USB link states, the PCIe host controller will operate in the L0 link state. One approach to avoid is to route USB2 on SoC South PCH (Platform Controller Hub) xHCI (eXtensible Host Controller Interface) controller to avoid keeping the PCIe link powered up. This approach introduces additional complexity in routing and reduces the SoC xHCI controller capabilities since two ports from SoC xHCI controller are used, resulting in less than complete utilization of the USB4 discrete host.

On the other hand, by reducing the PCIe link bandwidth, the USB2 peripherals are routed to the USB4 discrete host xHCI controller, thereby maximizing the input-output configuration with minimal power impact (e.g., 50 mW).

With the above in mind, the process of the flowchart proceeds as follows. At operation 500, the computing device is booted to load the operating system (OS). Initially after boot up, operation 501 indicates the PCIe link BW is at the Gen. 4 level and the link is in the L2 state (lower power sleep state) or L3 state (off state). Operation 502 includes connecting a USB keyboard and/or mouse to a USB Type-C port. Operation 503 indicates that the PCIe link BW remains at the Gen. 4 level while the link state changes to L0 (fully active). The link therefore wakes up to a more active state to prepare for the transmission of the keyboard/mouse data. At operation 504, the SoC and/or USB4 discrete host monitor the link BW and trigger throttling of the BW if appropriate, such as based on the process of FIG. 3.

In one approach, the first physical interface circuit (e.g., PCIe PHY I/F 130) increases a power state of the serial bus link from an L2/L3 state to an L0 state in response to the connection of a keyboard or mouse peripheral to the one or more USB ports.

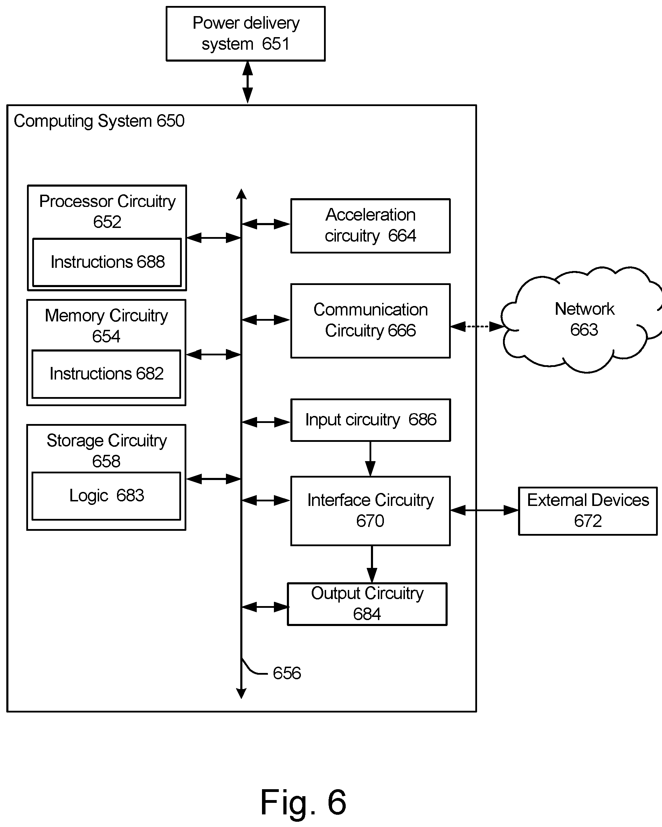

FIG. 6 illustrates an example of components that may be present in a computing system 650 for implementing the techniques (e.g., operations, processes, methods, and methodologies) described herein. The circuits 686, 670 and 684 may represent the system-on-a-chip (SoC) 101 and USB4 discrete host 102 of FIG. 1, for example. The external devices 672 may represent the peripherals 180-184 of FIG. 1.

The computing system 650 may be powered by a power delivery subsystem 651 and include any combinations of the hardware or logical components referenced herein. The components may be implemented as ICs, portions thereof, discrete electronic devices, or other modules, instruction sets, programmable logic or algorithms, hardware, hardware accelerators, software, firmware, or a combination thereof adapted in the computing system 650, or as components otherwise incorporated within a chassis of a larger system. For one embodiment, at least one processor 652 may be packaged together with computational logic 682 and configured to practice aspects of various example embodiments described herein to form a System in Package (SiP) or a System on Chip (SoC).

The system 650 includes processor circuitry in the form of one or more processors 652. The processor circuitry 652 includes circuitry such as, but not limited to one or more processor cores and one or more of cache memory, low drop-out voltage regulators (LDOs), interrupt controllers, serial interfaces such as SPI, I2C or universal programmable serial interface circuit, real time clock (RTC), timer-counters including interval and watchdog timers, general purpose I/O, memory card controllers such as secure digital/multi-media card (SD/MMC) or similar, interfaces, mobile industry processor interface (MIPI) interfaces and Joint Test Access Group (JTAG) test access ports. In some implementations, the processor circuitry 652 may include one or more hardware accelerators (e.g., same or similar to acceleration circuitry 664), which may be microprocessors, programmable processing devices (e.g., FPGA, ASIC, etc.), or the like. The one or more accelerators may include, for example, computer vision and/or deep learning accelerators. In some implementations, the processor circuitry 652 may include on-chip memory circuitry, which may include any suitable volatile and/or non-volatile memory, such as DRAM, SRAM, EPROM, EEPROM, Flash memory, solid-state memory, and/or any other type of memory device technology, such as those discussed herein

The processor circuitry 652 may include, for example, one or more processor cores (CPUs), application processors, GPUs, RISC processors, Acorn RISC Machine (ARM) processors, CISC processors, one or more DSPs, one or more FPGAs, one or more PLDs, one or more ASICs, one or more baseband processors, one or more radio-frequency integrated circuits (RFIC), one or more microprocessors or controllers, a multi-core processor, a multithreaded processor, an ultra-low voltage processor, an embedded processor, or any other known processing elements, or any suitable combination thereof. The processors (or cores) 652 may be coupled with or may include memory/storage and may be configured to execute instructions stored in the memory/storage to enable various applications or operating systems to run on the platform 650. The processors (or cores) 652 is configured to operate application software to provide a specific service to a user of the platform 650. In some embodiments, the processor(s) 652 may be a special-purpose processor(s)/controller(s) configured (or configurable) to operate according to the various embodiments herein.

As examples, the processor(s) 652 may include an Intel^{®} Architecture Core^{™} based processor such as an i3, an i5, an i7, an i9 based processor; an Intel^{®} microcontroller-based processor such as a Quark^{™}, an Atom^{™}, or other MCU-based processor; Pentium^{®} processor(s), Xeon^{®} processor(s), or another such processor available from Intel^{®} Corporation, Santa Clara, California. However, any number other processors may be used, such as one or more of Advanced Micro Devices (AMD) Zen^{®} Architecture such as Ryzen^{®} or EPYC^{®} processor(s), Accelerated Processing Units (APUs), MxGPUs, Epyc^{®} processor(s), or the like; A5-A12 and/or S1-S4 processor(s) from Apple^{®} Inc., Snapdragon^{™} or Centriq^{™} processor(s) from Qualcomm^{®} Technologies, Inc., Texas Instruments, Inc.^{®} Open Multimedia Applications Platform (OMAP)^{™} processor(s); a MIPS-based design from MIPS Technologies, Inc. such as MIPS Warrior M-class, Warrior I-class, and Warrior P-class processors; an ARM-based design licensed from ARM Holdings, Ltd., such as the ARM Cortex-A, Cortex-R, and Cortex-M family of processors; the ThunderX2^{®} provided by Cavium^{™}, Inc.; or the like. In some implementations, the processor(s) 652 may be a part of a system on a chip (SoC), System-in-Package (SiP), a multi-chip package (MCP), and/or the like, in which the processor(s) 652 and other components are formed into a single integrated circuit, or a single package, such as the Edison^{™} or Galileo^{™} SoC boards from Intel^{®} Corporation. Other examples of the processor(s) 652 are mentioned elsewhere in the present disclosure.

The system 650 may include or be coupled to acceleration circuitry 664, which may be embodied by one or more AI/ML accelerators, a neural compute stick, neuromorphic hardware, an FPGA, an arrangement of GPUs, one or more SoCs (including programmable SoCs), one or more CPUs, one or more digital signal processors, dedicated ASICs (including programmable ASICs), PLDs such as complex (CPLDs) or high complexity PLDs (HCPLDs), and/or other forms of specialized processors or circuitry designed to accomplish one or more specialized tasks. These tasks may include AI/ML processing (e.g., including training, inferencing, and classification operations), visual data processing, network data processing, object detection, rule analysis, or the like. In FPGA-based implementations, the acceleration circuitry 664 may comprise logic blocks or logic fabric and other interconnected resources that may be programmed (configured) to perform various functions, such as the procedures, methods, functions, etc. of the various embodiments discussed herein. In such implementations, the acceleration circuitry 664 may also include memory cells (e.g., EPROM, EEPROM, flash memory, static memory (e.g., SRAM, antifuses, etc.) used to store logic blocks, logic fabric, data, etc. in LUTs and the like.

In some implementations, the processor circuitry 652 and/or acceleration circuitry 664 may include hardware elements specifically tailored for machine learning and/or artificial intelligence (AI) functionality. In these implementations, the processor circuitry 652 and/or acceleration circuitry 664 may be, or may include, an AI engine chip that can run many different kinds of AI instruction sets once loaded with the appropriate weightings and training code. Additionally or alternatively, the processor circuitry 652 and/or acceleration circuitry 664 may be, or may include, AI accelerator(s), which may be one or more of the aforementioned hardware accelerators designed for hardware acceleration of AI applications. As examples, these processor(s) or accelerators may be a cluster of artificial intelligence (AI) GPUs, tensor processing units (TPUs) developed by Google^{®} Inc., Real AI Processors (RAPs^{™}) provided by AlphaICs^{®}, Nervana^{™} Neural Network Processors (NNPs) provided by Intel^{®} Corp., Intel^{®} Movidius^{™} Myriad^{™} X Vision Processing Unit (VPU), NVIDIA^{®} PX^{™} based GPUs, the NM500 chip provided by General Vision^{®}, Hardware 3 provided by Tesla^{®}, Inc., an Epiphany^{™} based processor provided by Adapteva^{®}, or the like. In some embodiments, the processor circuitry 652 and/or acceleration circuitry 664 and/or hardware accelerator circuitry may be implemented as AI accelerating co-processor(s), such as the Hexagon 685 DSP provided by Qualcomm^{®}, the PowerVR 2NX Neural Net Accelerator (NNA) provided by Imagination Technologies Limited^{®}, the Neural Engine core within the Apple^{®} A11 or A12 Bionic SoC, the Neural Processing Unit (NPU) within the HiSilicon Kirin 970 provided by Huawei^{®}, and/or the like. In some hardware-based implementations, individual subsystems of system 650 may be operated by the respective AI accelerating co-processor(s), AI GPUs, TPUs, or hardware accelerators (e.g., FPGAs, ASICs, DSPs, SoCs, etc.), etc., that are configured with appropriate logic blocks, bit stream(s), etc. to perform their respective functions.

The system 650 also includes system memory 654. Any number of memory devices may be used to provide for a given amount of system memory. As examples, the memory 654 may be, or include, volatile memory such as random access memory (RAM), static RAM (SRAM), dynamic RAM (DRAM), synchronous DRAM (SDRAM), RAMBUS^{®} Dynamic Random Access Memory (RDRAM^{®}), and/or any other desired type of volatile memory device. Additionally or alternatively, the memory 654 may be, or include, non-volatile memory such as read-only memory (ROM), erasable programmable ROM (EPROM), electrically erasable programmable (EEPROM), flash memory, non-volatile RAM, ferroelectric RAM, phase-change memory (PCM), flash memory, and/or any other desired type of non-volatile memory device. Access to the memory 654 is controlled by a memory controller. The individual memory devices may be of any number of different package types such as single die package (SDP), dual die package (DDP) or quad die package (Q17P). Any number of other memory implementations may be used, such as dual inline memory modules (DIMMs) of different varieties including but not limited to microDIMMs or MiniDIMMs.

Storage circuitry 658 provides persistent storage of information such as data, applications, operating systems and so forth. In an example, the storage 658 may be implemented via a solid-state disk drive (SSDD) and/or high-speed electrically erasable memory (commonly referred to as "flash memory"). Other devices that may be used for the storage 658 include flash memory cards, such as SD cards, microSD cards, XD picture cards, and the like, and USB flash drives. In an example, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, phase change RAM (PRAM), resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a Domain Wall (DW) and Spin Orbit Transfer (SOT) based device, a thyristor based memory device, a hard disk drive (HDD), micro HDD, of a combination thereof, and/or any other memory. The memory circuitry 654 and/or storage circuitry 658 may also incorporate three-dimensional (3D) cross-point (XPOINT) memories from Intel^{®} and Micron^{®}.

The memory circuitry 654 and/or storage circuitry 658 is/are configured to store computational logic 683 in the form of software, firmware, microcode, or hardware-level instructions to implement the techniques described herein. The computational logic 683 may be employed to store working copies and/or permanent copies of programming instructions, or data to create the programming instructions, for the operation of various components of system 650 (e.g., drivers, libraries, application programming interfaces (APIs), etc.), an operating system of system 650, one or more applications, and/or for carrying out the embodiments discussed herein. The computational logic 683 may be stored or loaded into memory circuitry 654 as instructions 682, or data to create the instructions 682, which are then accessed for execution by the processor circuitry 652 to carry out the functions described herein. The processor circuitry 652 and/or the acceleration circuitry 664 accesses the memory circuitry 654 and/or the storage circuitry 658 over the interconnect (IX) 656. The instructions 682 direct the processor circuitry 652 to perform a specific sequence or flow of actions, for example, as described with respect to flowchart(s) and block diagram(s) of operations and functionality depicted previously. The various elements may be implemented by assembler instructions supported by processor circuitry 652 or high-level languages that may be compiled into instructions 688, or data to create the instructions 688, to be executed by the processor circuitry 652. The permanent copy of the programming instructions may be placed into persistent storage devices of storage circuitry 658 in the factory or in the field through, for example, a distribution medium (not shown), through a communication interface (e.g., from a distribution server (not shown)), over-the-air (OTA), or any combination thereof.

The IX 656 couples the processor 652 to communication circuitry 666 for communications with other devices, such as a remote server (not shown) and the like. The communication circuitry 666 is a hardware element, or collection of hardware elements, used to communicate over one or more networks 663 and/or with other devices. In one example, communication circuitry 666 is, or includes, transceiver circuitry configured to enable wireless communications using any number of frequencies and protocols such as, for example, the Institute of Electrical and Electronics Engineers (IEEE) 802.11 (and/or variants thereof), IEEE 802.23.4, Bluetooth^{®} and/or Bluetooth^{®} low energy (BLE), ZigBee^{®}, LoRaWAN^{™} (Long Range Wide Area Network), a cellular protocol such as 3GPP LTE and/or Fifth Generation (5G)/New Radio (NR), and/or the like. Additionally or alternatively, communication circuitry 666 is, or includes, one or more network interface controllers (NICs) to enable wired communication using, for example, an Ethernet connection, Controller Area Network (CAN), Local Interconnect Network (LIN), DeviceNet, ControlNet, Data Highway+, or PROFINET, among many others.

The IX 656 also couples the processor 652 to interface circuitry 670 that is used to connect system 650 with one or more external devices 672. The external devices 672 may include, for example, sensors, actuators, positioning circuitry (e.g., global navigation satellite system (GNSS)/Global Positioning System (GPS) circuitry), client devices, servers, network appliances (e.g., switches, hubs, routers, etc.), integrated photonics devices (e.g., optical neural network (ONN) integrated circuit (IC) and/or the like), and/or other like devices.

In some optional examples, various input/output (I/O) devices may be present within or connected to, the system 650, which are referred to as input circuitry 686 and output circuitry 684. The input circuitry 686 and output circuitry 684 include one or more user interfaces designed to enable user interaction with the platform 650 and/or peripheral component interfaces designed to enable peripheral component interaction with the platform 650. Input circuitry 686 may include any physical or virtual means for accepting an input including, inter alia, one or more physical or virtual buttons (e.g., a reset button), a physical keyboard, keypad, mouse, touchpad, touchscreen, microphones, scanner, headset, and/or the like. The output circuitry 684 may be included to show information or otherwise convey information, such as sensor readings, actuator position(s), or other like information. Data and/or graphics may be displayed on one or more user interface components of the output circuitry 684. Output circuitry 684 may include any number and/or combinations of audio or visual display, including, inter alia, one or more simple visual outputs/indicators (e.g., binary status indicators (e.g., light emitting diodes (LEDs)) and multi-character visual outputs, or more complex outputs such as display devices or touchscreens (e.g., Liquid Crystal Displays (LCD), LED displays, quantum dot displays, projectors, etc.), with the output of characters, graphics, multimedia objects, and the like being generated or produced from the operation of the platform 650. The output circuitry 684 may also include speakers and/or other audio emitting devices, printer(s), and/or the like. Additionally or alternatively, sensor(s) may be used as the input circuitry 684 (e.g., an image capture device, motion capture device, or the like) and one or more actuators may be used as the output device circuitry 684 (e.g., an actuator to provide haptic feedback or the like). Peripheral component interfaces may include, but are not limited to, a non-volatile memory port, a USB port, an audio jack, a power supply interface, etc. In some embodiments, a display or console hardware, in the context of the present system, may be used to provide output and receive input of an edge computing system; to manage components or services of an edge computing system; identify a state of an edge computing component or service; or to conduct any other number of management or administration functions or service use cases.

The components of the system 650 may communicate over the IX 656. The IX 656 may include any number of technologies, including ISA, extended ISA, I2C, SPI, point-to-point interfaces, power management bus (PMBus), PCI, PCIe, PCIx, Intel^{®} UPI, Intel^{®} Accelerator Link, Intel^{®} CXL, CAPI, OpenCAPI, Intel^{®} QPI, UPI, Intel^{®} OPA IX, RapidIO^{™} system IXs, CCIX, Gen-Z Consortium IXs, a HyperTransport interconnect, NVLink provided by NVIDIA^{®}, a Time-Trigger Protocol (TTP) system, a FlexRay system, PROFIBUS, and/or any number of other IX technologies. The IX 656 may be a proprietary bus, for example, used in a SoC based system.

The number, capability, and/or capacity of the elements of system 650 may vary, depending on whether computing system 650 is used as a stationary computing device (e.g., a server computer in a data center, a workstation, a desktop computer, etc.) or a mobile computing device (e.g., a smartphone, tablet computing device, laptop computer, game console, IoT device, etc.). In various implementations, the computing device system 650 may comprise one or more components of a data center, a desktop computer, a workstation, a laptop, a smartphone, a tablet, a digital camera, a smart appliance, a smart home hub, a network appliance, and/or any other device/system that processes data.

The techniques described herein can be performed partially or wholly by software or other instructions provided in a machine-readable storage medium (e.g., memory). The software is stored as processor-executable instructions (e.g., instructions to implement any other processes discussed herein). Instructions associated with the flowchart (and/or various embodiments) and executed to implement embodiments of the disclosed subject matter may be implemented as part of an operating system or a specific application, component, program, object, module, routine, or other sequence of instructions or organization of sequences of instructions.

The storage medium can be a tangible machine readable medium such as read only memory (ROM), random access memory (RAM), flash memory devices, floppy and other removable disks, magnetic storage media, optical storage media (e.g., Compact Disk Read-Only Memory (CD ROMS), Digital Versatile Disks (DVDs)), among others.

The storage medium may be included, e.g., in a communication device, a computing device, a network device, a personal digital assistant, a manufacturing tool, a mobile communication device, a cellular phone, a notebook computer, a tablet, a game console, a set top box, an embedded system, a TV (television), or a personal desktop computer.

In the present detailed description, reference is made to the accompanying drawings that form a part hereof wherein like numerals designate like parts throughout, and in which is shown by way of illustration embodiments that may be practiced. It is to be understood that other embodiments may be utilized and structural or logical changes may be made without departing from the scope of the present disclosure.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation.

The terms "substantially," "close," "approximately," "near," and "about," generally refer to being within +/- 10% of a target value. Unless otherwise specified the use of the ordinal adjectives "first," "second," and "third," etc., to describe a common object, merely indicate that different instances of like objects are being referred to, and are not intended to imply that the objects so described must be in a given sequence, either temporally, spatially, in ranking or in any other manner.

For the purposes of the present disclosure, the phrases "A and/or B" and "A or B" mean (A), (B), or (A and B). For the purposes of the present disclosure, the phrase "A, B, and/or C" means (A), (B), (C), (A and B), (A and C), (B and C), or (A, B, and C).

The description may use the phrases "in an embodiment," or "in embodiments," which may each refer to one or more of the same or different embodiments. Furthermore, the terms "comprising," "including," "having," and the like, as used with respect to embodiments of the present disclosure, are synonymous.

As used herein, the term "circuitry" may refer to, be part of, or include an Application Specific Integrated Circuit (ASIC), an electronic circuit, a processor (shared, dedicated, or group), a combinational logic circuit, and/or other suitable hardware components that provide the described functionality. As used herein, "computer-implemented method" may refer to any method executed by one or more processors, a computer system having one or more processors, a mobile device such as a smartphone (which may include one or more processors), a tablet, a laptop computer, a set-top box, a gaming console, and so forth.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or link, and/or the like.

Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. If the specification states a component, feature, structure, or characteristic "may," "might," or "could" be included, that particular component, feature, structure, or characteristic is not required to be included. If the specification or claim refers to "a" or "an" element, that does not mean there is only one of the elements. If the specification or claims refer to "an additional" element, that does not preclude there being more than one of the additional elements.

In addition, well-known power/ground connections to integrated circuit (IC) chips and other components may or may not be shown within the presented figures, for simplicity of illustration and discussion, and so as not to obscure the disclosure. Further, arrangements may be shown in block diagram form in order to avoid obscuring the disclosure, and also in view of the fact that specifics with respect to implementation of such block diagram arrangements are highly dependent upon the platform within which the present disclosure is to be implemented (i.e., such specifics should be well within purview of one skilled in the art). Where specific details (e.g., circuits) are set forth in order to describe example embodiments of the disclosure, it should be apparent to one skilled in the art that the disclosure can be practiced without, or with variation of, these specific details. The description is thus to be regarded as illustrative instead of limiting.

An abstract is provided that will allow the reader to ascertain the nature and gist of the technical disclosure. The abstract is submitted with the understanding that it will not be used to limit the scope or meaning of the claims.

## Claims

1. An apparatus, comprising:
a memory (125, 654) to store instructions (682, 688); and
a processor (652) coupled to the memory (125, 654), wherein the processor (652) is to execute the instructions (682, 688) to:
determine a data rate by monitoring communications transmitted or received via a Peripheral Component Interconnect Express , PCIe, link (103) coupling a system-on-a-chip (101) to a discrete universal serial bus, USB, host (102) in an evaluation cycle, wherein the link (103) has a bandwidth at a start of the evaluation cycle, and the bandwidth represents a maximum available data rate of the link (103), and wherein the evaluation cycle is triggered by connection of a peripheral to the discrete USB host (102);
compare the data rate to one or more thresholds, wherein the one or more thresholds correspond to unidirectional per lane bandwidths of different generations of a PCIe standard; and
reduce the bandwidth in a remainder of the evaluation cycle based at least in part on whether the comparison indicates the data rate is below the one or more thresholds.

2. The apparatus of claim 1, wherein the data rate is a maximum data rate of a plurality of downstream paths (201, 202) of the PCIe link (103).

3. The apparatus of claim 2, wherein the plurality of downstream paths (201, 202) are to transmit data from the system-on-a-chip (101) to one or more peripherals via the discrete Universal Serial Bus host (102).

4. The apparatus of any one of claims 1-3, wherein:
the PCIe link (103) is to transmit data from the system-on-a-chip (101) to the discrete Universal Serial Bus host (102).

5. The apparatus of any one of claims 1-4, wherein the PCIe link (103) is to transmit data from the system-on-a-chip (101) to the discrete Universal Serial Bus , USB, host (102), and the processor (652) is to increase a power state of the PCIe link (103) in response to connection of the peripheral to the USB host (102).

6. The apparatus of claim 5, wherein the processor (652) is to increase the power state from an L2/L3 state to an L1 sub state when the peripheral comprises a DisplayPort peripheral.

7. The apparatus of claim 5, wherein the processor (652) is to increase the power state from an L2/L3 state to an L0 state when the peripheral comprises a keyboard (183) or mouse.

8. A non-transitory machine-readable storage (658) including machine-readable instructions (682, 688) that, when executed, cause a processor (652) or other circuit or computing device to perform a method comprising:
determining a data rate by monitoring communications transmitted or received via a Peripheral Component Interconnect Express , PCIe, link (103) coupling a system-on-a-chip (101) to a discrete universal serial bus, USB, host (102) in an evaluation cycle, wherein the link (103) has a bandwidth at a start of the evaluation cycle, and the bandwidth represents a maximum available data rate of the link (103), and wherein the evaluation cycle is triggered by connection of a peripheral to the discrete USB host (102);
comparing the data rate to one or more thresholds, wherein the one or more thresholds correspond to unidirectional per lane bandwidths of different generations of a PCIe standard; and
reducing the bandwidth in a remainder of the evaluation cycle based at least in part on whether the comparison indicates the data rate is below the one or more thresholds.

9. The non-transitory machine-readable storage (658) of claim 8, wherein the data rate is a maximum data rate of a plurality of downstream paths (201, 202) of the PCIe link (103).

10. The non-transitory machine-readable storage (658) of claim 9, wherein the plurality of downstream paths (201, 202) are to transmit data from the system-on-a-chip (101) to one or more peripherals via the discrete Universal Serial Bus host (102).

11. The non-transitory machine-readable storage (658) of any one of claims 8-10, wherein the PCIe link (103) is to transmit data from the system-on-a-chip (101) to the discrete Universal Serial Bus host (102).

12. The non-transitory machine-readable storage (658) of any one of claims 8-11, wherein the PCIe link (103) is to transmit data from the system-on-a-chip (101) to the discrete Universal Serial Bus , USB, host (102), and the processor (652) is to increase a power state of the PCIe link (103) in response to connection of the peripheral to the USB host (102).

13. The non-transitory machine-readable storage (658) of claim 12, wherein the processor (652) is to increase the power state from an L2/L3 state to an L1 sub state when the peripheral comprises a DisplayPort peripheral.

14. The non-transitory machine-readable storage (658) of claim 13, wherein the processor (652) is to increase the power state from an L2/L3 state to an L0 state when the peripheral comprises a keyboard (183) or mouse.

## Patentansprüche

1. Vorrichtung, die Folgendes umfasst:
einen Speicher (125, 654) zum Speichern von Anweisungen (682, 688); und
einen Prozessor (652), der mit dem Speicher (125, 654) gekoppelt ist, wobei der Prozessor (652) die Anweisungen (682, 688) ausführen soll, um Folgendes zu bewirken:
Bestimmen einer Datenrate durch Überwachen von Kommunikationen, die über eine Peripheral Component Interconnect Express (PCIe)-Verbindung (103) übertragen oder empfangen werden, die ein System-on-a-Chip (101) mit einem diskreten Universal Serial Bus (USB)-Host (102) in einem Auswertungszyklus koppelt, wobei die Verbindung (103) eine Bandbreite zu einem Beginn des Auswertungszyklus aufweist und die Bandbreite eine maximal verfügbare Datenrate der Verbindung (103) repräsentiert, und wobei der Auswertungszyklus durch Verbindung eines Peripheriegeräts mit dem diskreten USB-Host ausgelöst wird (102);
Vergleichen der Datenrate mit einem oder mehreren Schwellenwerten, wobei der eine oder die mehreren Schwellenwerte unidirektionalen Bandbreiten pro Spur verschiedener Generationen eines PCIe-Standards entsprechen; und
Reduzieren der Bandbreite in einem Rest des Bewertungszyklus zumindest teilweise basierend darauf, ob der Vergleich angibt, dass die Datenrate unter dem einen oder den mehreren Schwellenwerten liegt.

2. Vorrichtung nach Anspruch 1, wobei die Datenrate eine maximale Datenrate einer Vielzahl von Downstream-Pfaden (201, 202) der PCIe-Verbindung (103) ist.

3. Vorrichtung nach Anspruch 2, wobei die Vielzahl von Downstream-Pfaden (201, 202) Daten von dem System-on-a-Chip (101) über den diskreten Universal Serial Bus-Host (102) an eine oder mehrere Peripheriegeräte übertragen soll.

4. Vorrichtung nach einem der Ansprüche 1-3, wobei:
die PCIe-Verbindung (103) Daten von dem System-on-a-Chip (101) zu dem diskreten Universal Serial Bus-Host (102) übertragen soll.

5. Vorrichtung nach einem der Ansprüche 1-4, wobei die PCIe-Verbindung (103) Daten von dem System-on-a-Chip (101) zu dem diskreten Universal Serial Bus (USB)-Host (102) übertragen soll und der Prozessor (652) einen Leistungszustand der PCIe-Verbindung (103) als Reaktion auf eine Verbindung des Peripheriegeräts mit dem USB-Host (102) erhöhen soll.

6. Vorrichtung nach Anspruch 5, wobei der Prozessor (652) den Leistungszustand von einem L2/L3-Zustand zu einem L1-Unterzustand erhöhen soll, wenn das Peripheriegerät ein DisplayPort-Peripheriegerät umfasst.

7. Vorrichtung nach Anspruch 5, wobei der Prozessor (652) den Leistungszustand von einem L2/L3-Zustand in einen L0-Zustand erhöhen soll, wenn das Peripheriegerät eine Tastatur (183) oder Maus umfasst.

8. Nichtflüchtige maschinenlesbare Speicherung (658), die maschinenlesbare Anweisungen (682, 688) aufweist, die bei Ausführung einen Prozessor (652) oder eine andere Schaltung oder Rechenvorrichtung veranlassen, ein Verfahren durchzuführen, das Folgendes umfasst:
Bestimmen einer Datenrate durch Überwachen von Kommunikationen, die über eine Peripheral Component Interconnect Express (PCIe)-Verbindung (103) übertragen oder empfangen werden, die ein System-on-a-Chip (101) mit einem diskreten Universal Serial Bus (USB)-Host (102) in einem Auswertungszyklus koppelt, wobei die Verbindung (103) eine Bandbreite zu einem Beginn des Auswertungszyklus aufweist und die Bandbreite eine maximal verfügbare Datenrate der Verbindung (103) repräsentiert, und wobei der Auswertungszyklus durch Verbindung eines Peripheriegeräts mit dem diskreten USB-Host ausgelöst wird (102);
Vergleichen der Datenrate mit einem oder mehreren Schwellenwerten, wobei der eine oder die mehreren Schwellenwerte unidirektionalen Bandbreiten pro Spur verschiedener Generationen eines PCIe-Standards entsprechen; und
Reduzieren der Bandbreite in einem Rest des Bewertungszyklus zumindest teilweise basierend darauf, ob der Vergleich angibt, dass die Datenrate unter dem einen oder den mehreren Schwellenwerten liegt.

9. Nichtflüchtige maschinenlesbare Speicherung (658) nach Anspruch 8, wobei die Datenrate eine maximale Datenrate mehrerer Downstream-Pfade (201, 202) der PCIe-Verbindung (103) ist.

10. Nichtflüchtige maschinenlesbare Speicherung (658) nach Anspruch 9, wobei die Vielzahl von Downstream-Pfaden (201, 202) Daten von dem System-on-a-Chip (101) über den diskreten Universal Serial Bus-Host (102) an ein oder mehrere Peripheriegeräte übertragen sollen.

11. Nichtflüchtige maschinenlesbare Speicherung (658) nach einem der Ansprüche 8-10, wobei die PCIe-Verbindung (103) Daten von dem System-on-a-Chip (101) zu dem diskreten Universal Serial Bus-Host (102) übertragen soll.

12. Nichtflüchtige maschinenlesbare Speicherung (658) nach einem der Ansprüche 8-11, wobei der PCIe-Link (103) Daten von dem System-on-a-Chip (101) zu dem diskreten Universal Serial Bus (USB)-Host (102) übertragen soll und der Prozessor (652) einen Leistungszustand des PCIe-Links (103) als Reaktion auf eine Verbindung des Peripheriegeräts mit dem USB-Host (102) erhöhen soll.

13. Nichtflüchtige maschinenlesbare Speicherung (658) nach Anspruch 12, wobei der Prozessor (652) den Leistungszustand von einem L2/L3-Zustand auf einen L1-Unterzustand erhöhen soll, wenn das Peripheriegerät ein DisplayPort-Peripheriegerät umfasst.

14. Nichtflüchtige maschinenlesbare Speicherung (658) nach Anspruch 13, wobei der Prozessor (652) den Leistungszustand von einem L2/L3-Zustand auf einen L0-Zustand erhöhen soll, wenn das Peripheriegerät eine Tastatur (183) oder Maus umfasst.

## Revendications

1. Appareil, comprenant :
une mémoire (125, 654) pour stocker des instructions (682, 688) ; et
un processeur (652) couplé à la mémoire (125, 654), dans lequel le processeur (652) est destiné à exécuter les instructions (682, 688) pour :
déterminer un débit de données en surveillant des communications émises ou reçues par l'intermédiaire d'une liaison Peripheral Component Interconnect Express (interconnexion de composants périphériques express), PCIe, (103) couplant un système sur puce (101) à un hôte bus série universel, USB, discret (102) dans un cycle d'évaluation, dans lequel la liaison (103) a une bande passante au début du cycle d'évaluation, et la bande passante représentant un débit de données maximum disponible de la liaison (103), et dans lequel le cycle d'évaluation est déclenché par la connexion d'un périphérique à l'hôte USB discret (102) ;
comparer le débit de données à un ou plusieurs seuils, dans lequel les un ou plusieurs seuils correspondent à des largeurs de bande unidirectionnelles par voie de différentes générations d'une norme PCIe ; et
réduire la largeur de bande dans le reste du cycle d'évaluation en fonction au moins en partie de si la comparaison indique ou non que le débit de données est inférieur au ou aux seuils.

2. Appareil selon la revendication 1, dans lequel le débit de données est un débit de données maximum d'une pluralité de voies aval (201, 202) de la liaison PCIe (103).

3. Appareil selon la revendication 2, dans lequel la pluralité de voies aval (201, 202) est destinée à émettre des données depuis le système sur puce (101) jusqu'à un ou plusieurs périphériques par le biais de l'hôte bus série universel discret (102).

4. Appareil selon l'une quelconque des revendications 1 à 3, dans lequel :
la liaison PCIe (103) est destinée à émettre des données depuis le système sur puce (101) jusqu'à l'hôte bus série universel discret (102).

5. Appareil selon l'une quelconque des revendications 1 à 4, dans lequel la liaison PCIe (103) est destinée à émettre des données depuis le système sur puce (101) jusqu'à l'hôte bus série universel discret, USB, (102) et le processeur (652) est destiné à augmenter un état de puissance de la liaison PCIe (103) en réponse à une connexion du périphérique à l'hôte USB (102).

6. Appareil selon la revendication 5, dans lequel le processeur (652) est destiné à augmenter l'état de puissance d'un état L2/L3 jusqu'à un sous-état L1 lorsque le périphérique comprend un périphérique DisplayPort.

7. Appareil selon la revendication 5, dans lequel le processeur (652) est destiné à augmenter l'état de puissance d'un état L2/L3 jusqu'à un état L0 lorsque le périphérique comprend un clavier (183) ou une souris.

8. Stockage non transitoire lisible par machine (658) comprenant des instructions lisibles par machine (682, 688) qui, lorsqu'elles sont exécutées, amènent un processeur (652) ou un autre circuit ou dispositif informatique à réaliser un procédé comprenant :
la détermination d'un débit de données en surveillant des communications émises ou reçues par l'intermédiaire d'une liaison Peripheral Component Interconnect Express (interconnexion de composants périphériques express), PCIe, (103) couplant un système sur puce (101) à un hôte bus série universel, USB, discret (102) dans un cycle d'évaluation, dans lequel la liaison (103) a une bande passante au début du cycle d'évaluation, et la bande passante représentant un débit de données maximum disponible de la liaison (103), et dans lequel le cycle d'évaluation est déclenché par la connexion d'un périphérique à l'hôte USB discret (102) ;
la comparaison du débit de données à un ou plusieurs seuils, dans lequel les un ou plusieurs seuils correspondent à des largeurs de bande unidirectionnelles par voie de différentes générations d'une norme PCIe ; et
la réduction de la largeur de bande dans le reste du cycle d'évaluation en fonction au moins en partie de si la comparaison indique ou non que le débit de données est inférieur au ou aux seuils.

9. Mémoire non transitoire lisible par machine (658) selon la revendication 8, dans laquelle le débit de données est un débit de données maximum d'une pluralité de voies aval (201, 202) de la liaison PCIe (103).

10. Mémoire non transitoire lisible par machine (658) selon la revendication 9, dans laquelle la pluralité de voies aval (201, 202) est destinée à émettre des données depuis le système sur puce (101) jusqu'à un ou plusieurs périphériques par le biais de l'hôte bus série universel discret (102).

11. Mémoire non transitoire lisible par machine (658) selon l'une quelconque des revendications 8 à 10, dans laquelle la liaison PCIe (103) est destinée à émettre des données depuis le système sur puce (101) jusqu'à l'hôte bus série universel discret (102).

12. Mémoire non transitoire lisible par machine (658) selon l'une quelconque des revendications 8 à 11, dans lequel la liaison PCIe (103) est destinée à émettre des données depuis le système sur puce (101) jusqu'à l'hôte bus série universel discret, USB, (102) et le processeur (652) est destiné à augmenter un état de puissance de la liaison PCIe (103) en réponse à une connexion du périphérique à l'hôte USB (102).

13. Mémoire non transitoire lisible par machine (658) selon la revendication 12, dans laquelle le processeur (652) est destiné à augmenter l'état de puissance d'un état L2/L3 jusqu'à un sous-état L1 lorsque le périphérique comprend un périphérique DisplayPort.

14. Mémoire non transitoire lisible par machine (658) selon la revendication 13, dans laquelle le processeur (652) est destiné à augmenter l'état de puissance d'un état L2/L3 jusqu'à un état L0 lorsque le périphérique comprend un clavier (183) ou une souris.
